# EUROPÄISCHE PATENTSCHRIFT

(11) **EP 2 065 144 B1**
(45) Veröffentlichungstag und Bekanntmachung des Hinweises auf die Patenterteilung: **18.08.2010**
(21) Anmeldenummer: 08170107.0
(22) Anmeldetag: 27.11.2008
(51) Int. Cl.: B25J 19/06

(54) **Einrichtung zum Schutz von beweglichen, bevorzugt reaktionskraftfrei wirkenden Bearbeitungsköpfen**
Device to protect movable processing heads, especially ones that work without reaction power
Dispositif de protection de corps de traitement mobiles, notamment actifs sans force de réaction

(30) Priorität: 28.11.2007 DE 102007057910
(43) Veröffentlichungstag der Anmeldung: 03.06.2009
(73) Patentinhaber: Macaso GmbH, 08393 Meerane (DE)
(72) Erfinder: Wähner, Ralf, 09131 Chemnitz (DE); Skeide, Thomas, 08107 Hartmannsdorf (DE)
(74) Vertreter: Gulde, Klaus W.

(56) Entgegenhaltungen:
- DE-A1- 3 714 932
- DE-C1- 19 620 195

## Beschreibung

Die Erfindung betrifft eine Einrichtung zum Schutz von beweglichen, bevorzugt reaktionskraftfrei wirkenden Bearbeitungsköpfen.

Die Bearbeitungsköpfe sind Elemente von Maschinen und Anlagen, wobei sie als Werkzeuge in einem Arbeitsraum bewegt werden und dabei einer permanenten Gefahr ausgesetzt sind, mit festen oder beweglichen Objekten, also auch mit Personen, zu kollidieren und mit unzulässig hohen Kräften belastet zu werden. Es handelt sich hier um Bearbeitungsköpfe, die bei der Erfüllung ihrer technologischen Aufgabe keinen oder nur vernachlässigbar kleinen Reaktionskräften ausgesetzt sind, wie das z.B. für Inspektions-, Sprüh-, Laser- und Brennschneidarbeiten typisch ist. Der Bearbeitungskopf hat im bestimmungsgemäßen Betrieb keinen Kontakt mit einem Werkstück, er "schwebt" - von der Führungsmaschine, z.B. einem Portalroboter, gehalten und bewegt - durch den Arbeitsraum. Auf diese Weise kann der Bearbeitungskopf klein und leicht gebaut werden, was häufig aus Gründen der Zugänglichkeit zwingend erforderlich ist und es kann der Bearbeitungskopf gleichzeitig sehr genau justiert werden und demzufolge auch sehr genau arbeiten. Im Fall von Berührungen des Bearbeitungskopfes durch feste oder bewegliche Objekte auf Grund einer unerwünschten Relativbewegung des Bearbeitungskopfes und/oder des Objektes in der Umgebung steigen die Kräfte, die auf den Bearbeitungskopf wirken, blitzartig und sprunghaft an und sie können, wenn nicht gar zur Zerstörung des Bearbeitungskopfes, so häufig zu dessen Dejustierung führen. Dann ist eine aufwendige Neujustage erforderlich, die in der Regel nur von speziell geschulten Einrichtern vorgenommen werden kann.

Aus der Sicht des Standes der Technik gibt es eine Reihe von technischen Lösungen, um die bei einer unerwünschten Relativbewegung - verbunden mit einer Kollision - wirkenden hohen Kräfte zu begrenzen.

Bei Werkzeugmaschinen dienen hierzu spezielle Überwachungseinrichtungen, die mit am Spindelkasten befestigten Piezosensoren Schwingungen einerseits, Verformungen andererseits extrem schnell detektieren und eine Notabschaltung der Maschine herbeiführen. In der Regel wird hierbei das Werkzeug beschädigt, die Maschine jedoch geschützt. Darüber hinaus sind vergleichsweise große Reaktionskräfte, wie sie typisch bei der spanenden Bearbeitung auftreten, notwendig, damit überhaupt ein Sensorsignal entsteht. Für Bearbeitungsköpfe ohne Reaktionskräfte scheidet diese Lösung aus.

Zunehmend werden in Werkzeugmaschinensteuerungen Softwaresysteme integriert, die die programmierten Bahnbewegungen online, also während der Bearbeitung, jedoch mit einem geringen zeitlichen Vorlauf, auf Kollisionen mit der Umgebung (Werkstück, Spannvorrichtungen, Drehvorrichtungen usw.) untersuchen. Wird eine Kollision berechnet, wird die Maschine stillgesetzt. Der zeitliche Vorlauf für die Kollisionsermittlung reicht aus, um einen Maschinenstillstand vor einer realen Kollision zu ermöglichen. Damit die Kollisionsberechnung funktioniert ist einerseits kostenintensive Hard- und Software erforderlich und es muss andererseits ein konsistentes Abbild der Realität in der Steuerung vorhanden sein. Unerwartet im Arbeitsraum auftauchende Objekte können nicht erkannt werden.

Für Industrieroboter sind Kollisionsschutzsensoren handelsüblich, die zwischen einem Werkzeug - z.B. einem Schweißbrenner - und einem Roboterhandgelenk angeordnet werden. Mittels Federn oder Pneumatikzylindern werden Kegelsitze oder Kugelgehemme vorgespannt, bei Überschreitung der Vorspannkraft geöffnet und ein Sensorsignal erzeugt. Eine solche Lösung wird zum Beispiel in der Gebrauchsmusterschrift DE 20 2006 014 324 U1 beschrieben. Diese und ähnliche Lösungen haben sich in der industriellen Praxis beim Lichtbogenschweißen durchgesetzt.

Die Hysterese dieser, primär formschlüssig wirkenden Lösungen ist groß, d.h., es muss zunächst eine hohe Kraftspitze überwunden werden, wobei sich der Sensor schon verformt, jedoch noch kein Sensorsignal generiert wird. Die Rückstellgenauigkeit ist für das Lichtbogenschweißen ausreichend, für Präzisionsbearbeitungen jedoch zu gering. Der Bewegungsbereich solcher Lösungen beschränkt sich weitestgehend auf eine Winkelbeweglichkeit. Das erfordert, den Kollisionsschutzsensor zwischen dem Roboterhandgelenk und einem Roboterwerkzeug anzuordnen und bedingt, dass die Kollisionsschutzwirkung an der Werkzeugspitze, also in distaler Richtung, hoch ist und zum Roboterhandgelenk hin, also in proximale Richtung, stark abnimmt.

In DE 3620391 wird eine Vorrichtung zur lösbaren Verbindung eines Greifers oder Werkzeuges mit einem Roboterarm beschrieben, die auf zwei miteinander gelenkig verbundenen Platten, einer Grundplatte und einer Tragplatte, besteht, die durch eine bis zu einer Belastungsschwelle starre Überlastkupplung fest miteinander verbunden sind. Löst die Überlastkupplung aus ist die gelenkige Verbindung der beiden Platten möglich. Um diese Einrichtung an einem Roboter, der naturgemäß räumliche Bewegungen ausführt, nutzen zu können, muss die gelenkige Verbindung der beiden Platten mindestens den Freiheitsgrad 2 besitzen. In der Schrift wird vorgeschlagen, hierzu drei jeweils gelenkig mit der Grund- und der Tragplatte verbundene Stäbe zu verwenden, die durch eine Verdreh- und Verschiebesicherung bis zum Überschreiten der Auslösekraft an ihrer Bewegung gehindert werden. Für diese technische Lösung sind mindestens sechs räumliche Gelenke (Kreuzgelenke oder Kugelgelenke) erforderlich; diese benötigen einen großen Bauraum. Die Gefahr der negativen Wirkung von Gelenkspiel ist groß, zumal durch die Verdreh- und Verschiebesicherung die Gelenke im verriegelten Zustand mit größeren statischen Kräften beaufschlagt werden. Die Verdreh- und Verschiebesicherung selbst basiert auf formschlüssigen Kupplungsflächen, die durch einen Druckmittelzylinder beaufschlagt werden. Weiter wird in dieser Schrift vorgeschlagen, drei Kugeln in kegelförmige "...Anbohrungen..." greifen zu lassen und diese von einem "...Taumelkolben..." vorzuspannen. Auch wird in dieser Schrift vorgeschlagen, die Streben als druckmittelbeaufschlagte Teleskopstäbe auszubilden, den Druck in den Stäben zu messen und daraus eine Schaltinformation abzuleiten. Letztendlich wird vorgeschlagen, die Streben als Seile auszuführen.

Die Gestaltung der Überlastkupplung als ein Gehemme (vgl. Getriebetechnik-Lehrbuch, VEB Verlag Technik Berlin, 5.Aufl., 1987) schließt alle negativen Wirkungen von Reibung und elastischer Verformung der Getriebeglieder ein. So wird sich an einer nach dieser Schrift ausgeführten Konstruktion eine Hysterese einstellen, d.h. nach Auslösen und sich daran anschließender, erneuter Verriegelung werden Lagetoleranzen der beiden Platten zueinander erwartet werden müssen. Toleranzen der drei, wie auch immer ausgeführten Stäbe haben Einfluss auf die Lagegenauigkeit der Grund- und Trageplatte zueinander. Diese Toleranzen können sich während des Betriebes der Vorrichtung leicht erhöhen, da die vorgeschlagene Lösung bedingt, dass die Streben im verriegelten Zustand durch die Verriegelungskraft vorgespannt werden.

Ein Gehemme wird auch in DE 200 06 367 U1 beschrieben. Hier handelt es sich um zwei durch eine Druckfeder mit innenliegender Schraube gegeneinander gedrückte Platten, die durch kegelförmige Positionierstifte, die in zylindrische Löcher eingreifen, gegeneinander positioniert sind. Auch an dieser technischen Lösung kommt der Nachteil von Gehemmen zum Tragen. Die zwischen den Stiften und den Bohrungen notwendigerweise entstehende hohe Pressung führt zu hohen Reibkräften, zumindest elastischen Bauteilverformungen und damit zu einer Rückstellgenauigkeit nach einer Auslösung der Sicherheitskupplung, die für eine Reihe von Anwendungen unakzeptabel hoch ist. Die Weg-Kraft-Kennlinie von Gehemmen ist **dadurch gekennzeichnet, dass** bei kleinen Relativwegen zwischen den beiden Wirkpartnern, also hier den Bohrungen und den kegelförmigen Stiften, zunächst die Kraft weiter ansteigt und erst dann abfällt, also eine typische Dreiecksform besitzt. Der höchste Punkt dieser Kennlinie muss zum Auslösen erst überschritten werden. Ein blitzartiges, schnappendes Auslösen mit dem Sprung sämtlicher Haltekräfte auf Null ist nicht möglich.

Um Kollisionen zwischen einem Roboterarm und einem Hindernis, zum Beispiel auch eine im Arbeitsraum unerwartet auftauchende Person, zu erkennen und ohne Schaden für den Roboter und das Kollisionsobjekt zu beherrschen, wird in DE 102 26 853 B3 vorgeschlagen, in kurzen Zeitintervallen die kinetische Energie des Roboterarmes einerseits, die zulässige Maximalkraft bei einer Kollision aufgrund der detektierten Nähe zu Kollisionsobjekten andererseits zu bestimmen und bei Überschreitung der zulässigen kinetischen Energie die Robotergeschwindigkeit zu verringern. Der Roboterarm trägt eine elastische Haube, die die Kollisionskraft minimiert und die Sensoren trägt. Es ist mit dieser Anordnung möglich und zulässig, dass Roboter und Personen in nächster Nähe, quasi Hand in Hand, arbeiten, z.B. für Montageaufgaben. Durch die elastische Haube wird der Roboter-Kollisionsraum vergrößert und sein Bewegungsbereich begrenzt, was für einige Anwendungen einen erheblichen Nachteil darstellt. Die elastische Haube ist nicht geeignet für Anwendungen, in denen raue Umweltbedingungen, wie Verschmutzung und Hitze, herrschen.

Für sehr empfindliche, hochgenau zu justierende Laser-Bearbeitungsköpfe ist eine technische Lösung beschrieben, die den Laserkopf vermittels Elektro- oder Dauermagneten mit der Maschine verbindet (Trumpf GmbH &. Co KG, D-71252 Ditzingen, Presseinformation vom 24.10.2006). Diese als Magnetkupplung bezeichnete Lösung öffnet bei einer Kollision, der Laserkopf fällt ab und wird von einer Kunststofflasche gesichert und aufgefangen. Nach Beseitigung der Kollisionsbedingung muss der Bearbeitungskopf manuell wieder eingesetzt werden und die Arbeit mit der Maschine kann fortgesetzt werden.

Der Vorteil dieser Lösung ist ihre hohe Genauigkeit. Die Magnetkupplung, bei der die einzige Verbindung zwischen dem Bearbeitungskopf und der Maschine kraftschlüssig über Elektro- oder Dauermagnete geschieht, ist allerdings nur geeignet für kleine, leichte Bearbeitungsköpfe, da die Magnetkupplung auch die Massenkräfte des Bearbeitungskopfes tragen muss. Das Herausfallen des Bearbeitungskopfes durch Trennung der Magnetkupplung erfolgt unkoordiniert und kann zum Verklemmen und Verkanten des Kopfes und damit auch zu einer Beschädigung desselben führen. Die Neuverbindung der Magnetkupplung muss manuell erfolgen.

Eine weitere Lösung zeigt, wie verfahren wird, wenn unerwünscht hohe Kräfte bei Fügeoperationen mit Industrierobotern auftreten auf Grund von Toleranzen zwischen den Fügepartnern. Um die Toleranzen zu kompensieren und die Fügekräfte zu minimieren werden Kreuzschiebeelemente benutzt, die sich mit einem doppelt wirkenden Pneumatikzylinder zentrieren und verriegeln lassen (Firmenunterlagen IPR GmbH, D-74193 Schwaigern).

Auf kreuzweise angeordneten Schiebeefementen basiert auch die in DE 3714932 C2 beschriebene Lösung. Dazu ist der gesamte Roboter auf zwei über Kreuz seriell angeordnete Schieber gestellt. Vermittels federgespannter Gleitstücke wird der Roboter in beiden Schubrichtungen zentriert und gehalten. Ist durch eine Kollision oder durch eine unkontrollierte schnelle Bewegung des Roboters die Reaktionskraft auf der distalen Seite der über Kreuz angeordneten Schieber höher als die Federvorspannkraft, löst sich der Schieber vom Anschlag, es wird ein Sensor ausgelöst und die Maschine still gesetzt. Der Vorteil dieser Lösung besteht darin, dass nicht nur der Greiferbereich, sondern der gesamte Roboter gegen Kollisionen geschützt ist. Ein Nachteil dieser Lösung ist jedoch, dass, da der gesamte Industrieroboter auf der distalen, beweglichen Seite der Vorrichtung angeordnet ist, vergleichsweise große Federkräfte benötigt werden, um die Trägheitskräfte normaler, bestimmungsgemäßer Roboterbewegungen aufzunehmen. Damit könnte es, bei den üblichen Verhältnissen von Robotereigenmasse, Robotertragfähigkeit, Robotergeschwindigkeit und Roboterreichweite bei einer Kollision am Handgelenk schon zu unzulässig hohen Kräften kommen. Im Kollisionsfall, d.h. bei einer Bewegung der Gleitstücke von den Anschlägen weg, steigt die Federkraft proportional zu Auslenkung weiter an. Nach Stillsetzung der Maschine bleibt die Vorspannung bestehen, d.h., bei einem festen Kollisionspartner, z.B. einem Vorrichtungsteil, drückt der Roboter mit der Federvorspannkraft auf diesen. Ist hingegen der Kollisionspartner ein bewegliches Objekt, wird der Roboter nach Wegfall der Kollision, gezogen von den Federn, in seine zentrische Stellung zurückschnappen. Je nach Größe des Roboters entsteht auf diese Weise eine zusätzliche Gefahrenquelle.

Schließlich sei DE 196 20 195 C1 genannt, in der ein Füge- oder Trennmodul für Industrieroboter vorgeschlagen wird. Es soll zum Feinpositionieren und / oder Montieren bzw. Demontieren von Teilen oder von Werkzeugen an Werkstücken unter Vibrationsunterstützung für einen solchen genutzt werden. Die angegebenen beiden Platten des Vibratorkopfes besitzen eine zentrale Durchtrittsöffnung für eine Drehantriebsverbindung des entsprechenden Greifers, so dass die Platten nur sehr eingeschränkt gegeneinander verschieblich sind. Ein schlagartiges Lösen des Greifers aus einer starren einjustierten Verbindung im Kollisionsfall ist hier nicht möglich.

Somit ist es Aufgabe der Erfindung, eine Kollisionsschutzeinrichtung zu schaffen, bevorzugt für Portalroboter und portalroboterähnliche Führungsmaschinen mit Bearbeitungsköpfen, die keine oder nur vernachlässigbar kleine Reaktionskräfte aus dem Bearbeitungsprozess heraus aufnehmen müssen. Die Kollisionsschutzeinrichtung soll zwischen einer Führungsmaschine und einem Bearbeitungskopf angeordnet sein und sie soll bei Überschreitung einer Grenzkraft in der Art einer Schnappverbindung blitzartig auslösen, ein Sensorsignal generieren, die Bewegung eines Bearbeitungskopfes in Richtung der Kollisionskraft kraftfrei ermöglichen und eine derartige Beweglichkeit in Kraftrichtung gestatten, dass ein bahntreues Abbremsen der Maschine möglich ist. Zur Verriegelung der Kollisionsschutzeinrichtung sollen keine formschlüssigen, sondern ausschließlich kraftschlüssige Verbindungen Verwendung finden.

Ähnlich einem Schneckenfühler soll die Kollisionsschutzeinrichtung mittels eingebauter, schnell wirkender Antriebe im Kollisionsfall so in Richtung des Kollisionskraftvektors verschoben werden, dass, nach einer anfänglichen, die Kollision auslösenden Berührung kein weiterer Kontakt zwischen dem Kollisionspartner und dem Bearbeitungskopf stattfindet.

Ferngesteuert soll nach Wegfall der Kollisionsbedingung der Bearbeitungskopf in Arbeitsposition zurück bewegt werden können, ohne dass die Kollision Einfluss auf seine Justage genommen hat.

Erfindungsgemäß wird die Aufgabe durch eine Einrichtung gemäß Patentanspruch 1 gelöst.

Die weitere Ausgestaltung der Erfindung ergibt sich aus den Patentansprüchen 2 bis 6.

Zur Darlegung der Erfindung sollen weitere Ausführungen folgen.

Erfindungsgemäß besteht die Einrichtung zum Schutz eines Bearbeitungskopfes, der sich am distalen, also vom Gestell weg zeigenden Ende eines Gelenkarm- oder Portalroboters oder einer vergleichbaren Führungsmaschine befindet und z.B. für Inspektions-, Sprüh- oder Schneidarbeiten (Brennschneiden, Laserschneiden) genutzt wird aus einer vertikalen und möglichst dicht übereinander liegender und dabei in x- und y-Richtung gegeneinander verschieblichen Anordnung dreier Platten. Die drei Platten sind durch Schubgelenke miteinander verbunden, die durch Linearschlitten und -schienen zwischen der ersten und zweiten sowie zwischen der zweiten und dritten Platte ausgebildet sind. Die Auslenkung jeweils einer Platte eines Plattenpaares gegenüber der verbleibenden gesteilfesten geschieht aus einer Einrastposition und Null-Lage des Bearbeitungskopfes heraus, indem unter Überwindung von Oberflächenkräften, z.B. Magnetkräften, eine Bewegung auf Linearführungen entlang eines definiert langen Weges zurücklegbar ist. Schiebeanschläge gewährleisten, dass von der Einrastposition aus die Linearbewegung in beide Richtungen, je nach Wirkungsrichtung der äußeren Kräfte, möglich ist. Ein Linearbewegungssensor detektiert die Richtung der äußeren Kraft und generiert ein NOT-AUS-Signal, wenn durch die Wirkung der äußeren Kräfte die Oberflächenkräfte am Schiebeanschlag überschritten werden. Zwei in Richtung der Linearbewegung gegeneinander doppelt wirkende Pneumatikzylinder sind als Linearantriebe vorgesehen und sind gegensätzlich mit Druck beaufschlagbar. Ihre Ansteuerung wird von einer Steuerung, die die Signale des Linearbewegungssensors verarbeitet, veranlasst, indem ein von der Steuerung generiertes Signal dazu genutzt wird, die Ventile der Pneumatikzylinder zu öffnen bzw. zu schließen. Im unkollidierten Zustand, d.h. in einjustierter Lage des Bearbeitungskopfes, sind beide Pneumatikzylinder beidseitig entlüftet.

Die Einrichtung soll nachfolgend anhand eines zweckmäßigen Ausführungsbeispiels näher erläutert werden.

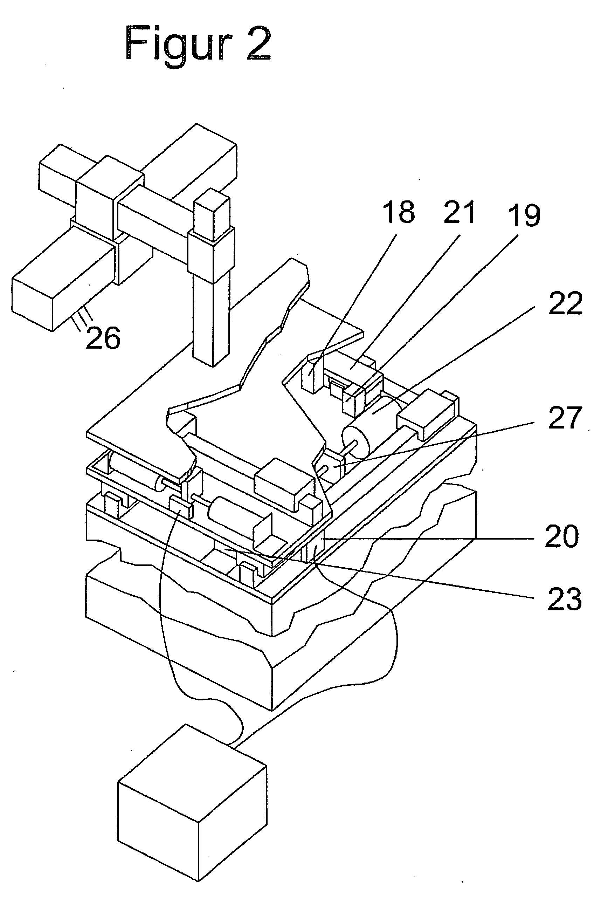

Es wird dazu auf die Figuren 1 und 2 verwiesen, die die Einrichtung in perspektivischen Ansichten mit Details in Teilschnittdarstellung zeigt. Das Verhalten der Einrichtung bei einer Kollision zeigen die Figuren 3 und 4. Eine weitere konstruktive Gestaltungsvariante der Einrichtung und deren Verhalten bei Kollision zeigen die Figuren 5, 6 und 7.

Die Einrichtung besteht aus einer - in distaler, also vom Gestell 26 zum Arbeitskopf zeigender, Richtung gesehenen - seriellen Anordnung einer ersten Platte 1, einer zweiten Platte 2 und einer dritten Platte 3, die untereinander durch Schubgelenke, bestehend aus ersten Linearschlitten 6a, 6b und ersten Linearschienen 7a,7b zwischen der Platte 1 und der Platte 2 und zweiten Linearschlitten 8a, 8b und zweiten Linearschienen 9a,9b zwischen der Platte 2 und der Platte 3, verbunden sind. Der Winkel zwischen der Richtung der beiden Schubgelenke ist ungleich 0 und er ist zweckmäßigerweise ein rechter.

Parallel schiebebeweglich zu den Schubgelenken angeordnet ist zwischen der ersten Platte 1 und der zweiten Platte 2 der erste Schiebeanschlag 10 und zwischen der zweiten Platte 2 und der dritten Platte 3 der zweite Schiebeanschlag 21.

Die Wirkung der Einrichtung ist entlang der beiden Schubrichtungen identisch, weswegen zur Erläuterung der Funktionsweise nur auf eine Schubrichtung Bezug genommen wird.

Der erste Schiebeanschlag 10 steht in Wirkbeziehung zu dem mit der ersten Platte 1 fest verbundenem ersten Festanschlag 11 einerseits und dem mit der zweiten Platte 2 fest verbundenen zweiten Festanschlag 12 andererseits dergestalt, dass im verriegelten Zustand zwischen dem ersten Festanschlag 11 und dem ersten Schiebeanschlag 10 und zwischen dem zweiten Festanschlag 12 und dem ersten Schiebeanschlag 10 eine kraftschlüssige Verbindung auf Grund von Oberflächenkräften besteht.

Bevorzugt sind die Oberflächenkräfte magnetischer Natur, indem die Festanschläge 11 und 12 als Permanentmagnete ausgebildet sind und der Schiebeanschlag 10 aus einem ferromagnetischen Material besteht. Die Oberflächenkräfte können aber auch durch ein Vakuum generiert werden, indem evakuierte Kammern in den Festanschlägen 11 und 12 vom Schiebeanschlag 10 luftdicht verschlossen werden. Durch Nutzung dieser oder vergleichbarer, hier zusammenfassend als Oberflächenkräfte bezeichneten Wirkprinzipien wird es möglich, dass im nichtkollidierten Zustand die Lagegenauigkeit zwischen dem ersten Schiebeanschlag 10 und dem ersten und dem zweiten Festanschlag 11 und 12 wesentlich besser als die vom Bearbeitungskopf 5 geforderte Positioniergenauigkeit ist.

Den hier zusammenfassend als Oberflächen kräfte bezeichneten Wirkprinzipien ist eigen, dass sie eine steil fallende Weg-Kraft-Kennlinie besitzen, d.h., schon bei kleinsten Abständen zwischen den beiden Wirkpartnern, also z.B. dem Festanschlag 11 und dem Schiebeanschlag 10 oder dem Festanschlag 12 und dem Schiebeanschlag 10 nimmt die Kraftwirkung zwischen den Wirkpartnern rapide ab. Bei einer wie auch immer gearteten Kollision des Bearbeitungskopfes 5 mit einem Maschinenteil, einer Person oder einem Werkstück und damit einhergehenden äußeren Kräften entlang der Schubrichtung der Schubgelenke, bestehend aus den ersten Linearschlitten 6a, 6b und den ersten Linearschienen 7a, 7b, bleibt zunächst die feste Verbindung zwischen der ersten Platte 1 und der zweiten Platte 2 über den ersten Festanschlag 11, den ersten Schiebeanschlag 10, den zweiten Festanschlag 12 und die zwischen dem ersten Schiebeanschlag 10 und dem ersten und zweiten Festanschlag 11, 12 wirkenden Oberflächenkräfte bestehen. Übersteigen die äußeren Kräfte die Oberflächenkräfte zwischen dem ersten Schiebeanschlag 10 und dem ersten und dem zweiten Festanschlag 11,12 öffnet sich, je nach Richtungssinn der äußeren Kraft, diejenige Verbindung zwischen dem ersten Schiebeanschlag 10 und dem ersten und dem zweiten Festanschlag 11, 12, die auf Zug beansprucht ist, sofort und gestattet eine praktisch kraftfreie Relativbewegung der ersten Platte 1 und der zweiten Platte 2 zueinander entlang der Schubgelenke, letztere gebildet aus den ersten Linearschlitten 6a, 6b und den ersten Linearschienen 7a, 7b. Gleichzeitig wird durch einen ersten Linearbewegungssensor 16 die Richtung der Auslösebewegung und damit die Richtung der wirkenden äußeren Kraft erkannt und es wird vermittels des ersten oder des zweiten Linearantriebes 13, 14 der Bearbeitungskopf 5 mit großer Dynamik in Richtung der wirkenden äußeren Kraft bewegt.

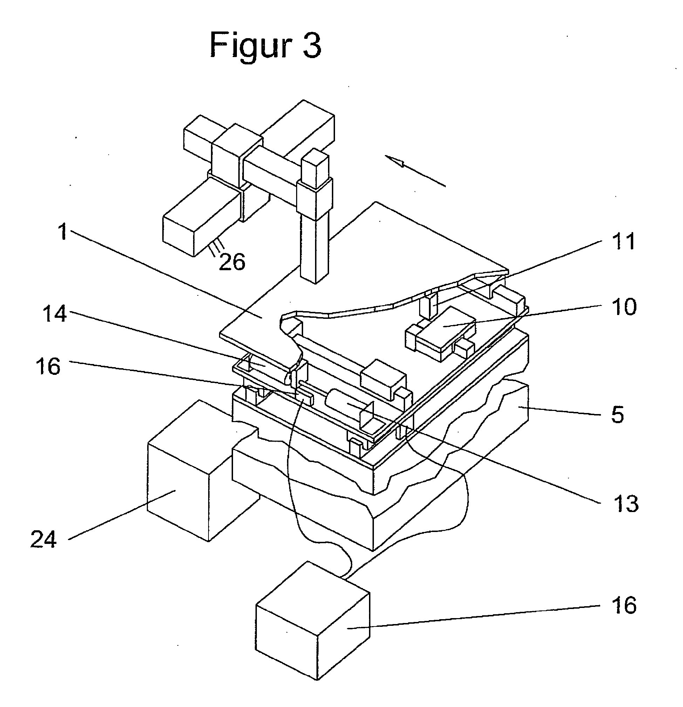

Zum Beispiel wird entsprechend Figur 3 bei einer Bewegung des Bearbeitungskopfes 5 in dargestellter Richtung und einer sich damit ergebenden Kollision mit dem ersten Kollisionsgegner 24 die durch die Oberflächenkräfte bestehende Verbindung zwischen dem ersten Festanschlag 11 und dem ersten Schiebeanschlag 10 auf Zug beansprucht und sie wird öffnen, wenn die äußere Kraft die Oberflächenkraft übersteigt. Die zweite Platte 2 und alle distal an ihr angeordneten Elemente bewegen sich entgegen der Bewegungsrichtung des Bearbeitungskopfes 5 relativ zur ersten Platte 1. Eine Relativbewegung zwischen dem zweiten Festanschlag 12, dem ersten Schiebeanschlag 10 und der Platte 2 erfolgt nicht.

Der Linearbewegungssensor 16 erkennt die Bewegungsrichtung der zweiten Platte 2 relativ zur ersten Platte 1 und aktiviert die beiden, mit der zweiten Platte 2 zylinderseitig fest verbundenen ersten und zweiten Linearantriebe 13,14, die vorteilhaft als doppelt wirkende Pneumatikzylinder ausgebildet sind, derart, dass die in unkollidiertem Zustand beidseitig entlüfteten Pneumatikzylinder - hier stehen sie miteinander nicht im Eingriff - aktiviert werden in der Weise, dass der erste Linearantrieb 13 zylinderseitig und der zweite Linearantrieb 14 kolbenstangenseitig mit Druck beaufschlagt werden, indem das vom ersten Linearbewegungssensor 16 generierte Signal in einer Steuerung 17 verarbeitet wird und Ventile der Pneumatikzylinder ansteuert.

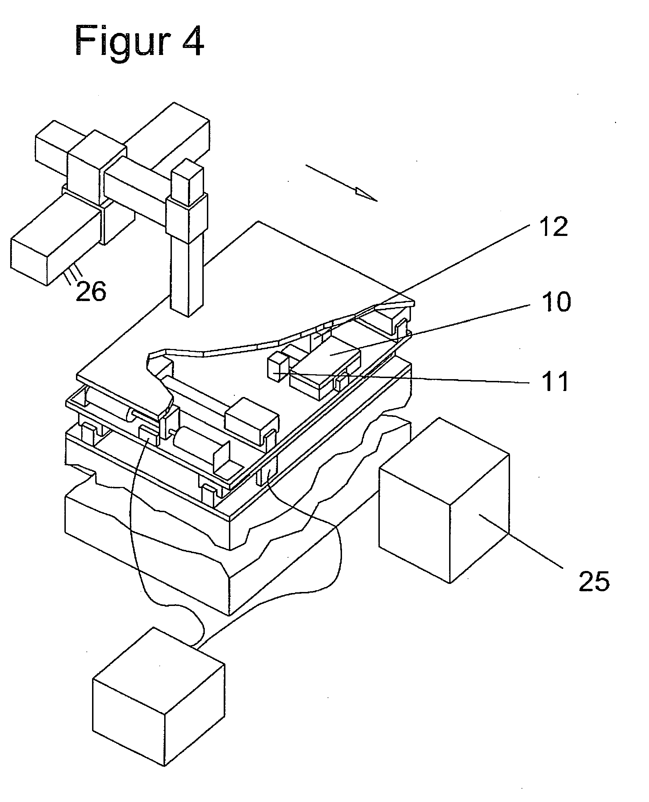

Bei entgegengesetzter Bewegungsrichtung und der Kollision des Bearbeitungskopfes 5 mit dem Kollisionsgegner 25 entsprechend Figur 4 wird die durch Oberflächenkräfte bestehende Verbindung zwischen dem ersten Schiebeanschlag 10 und dem zweiten Festanschlag 12 auf Zug, die Verbindung zwischen dem ersten Schiebeanschlag 10 und dem ersten Festanschlag 11 hingegen auf Druck beansprucht. Bei Überschreitung der Oberflächenkraft öffnet die Verbindung zwischen dem ersten Schiebeanschlag 10 und dem zweiten Festanschlag 12. Die zweite Platte 2 und alle distal an ihr angeordneten Elemente bewegen sich entgegen der Bewegungsrichtung des Bearbeitungskopfes 5 relativ zur ersten Platte 1, indem sich eine Relativbewegung zwischen den ersten Linearschlitten 6a, 6b und den ersten Linearschienen 7a, 7b ergibt. Die Verbindung zwischen dem ersten Festanschlag 11 und dem ersten Schiebeanschlag 10 bleibt fest. Die Relativbewegung zwischen dem ersten Festanschlag 11 und der zweiten Platte 2 wird durch eine Verschiebung des ersten Verschiebeanschlages 10 kompensiert. Der erste Linearbewegungssensor 16 ist in der Lage, über ein Getriebe mit einer deutlich unter 1 liegenden Übersetzung eine Relativbewegung und deren Richtung der ersten und zweiten Platte 1,2 bzw. der zweite Linearbewegungssensor 20 eine Relativbewegung und deren Richtung der zweiten und dritten Platte 2,3 zu erkennen.

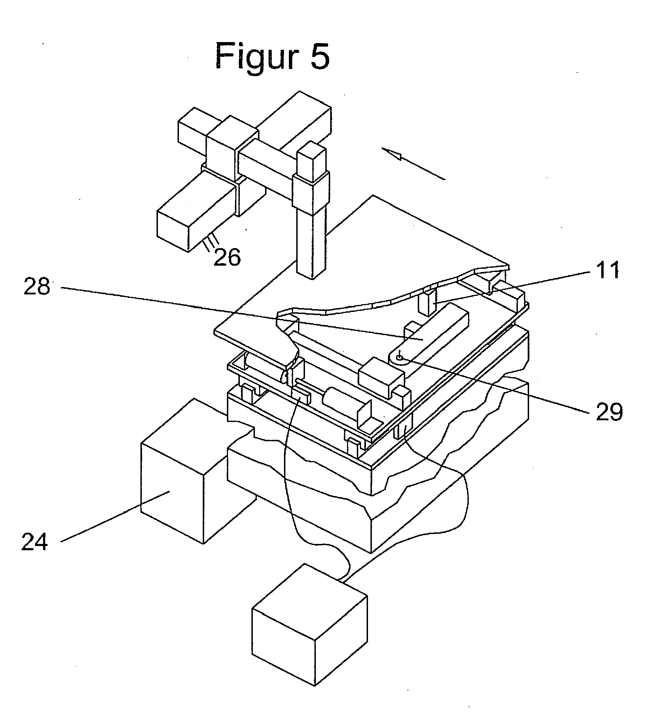

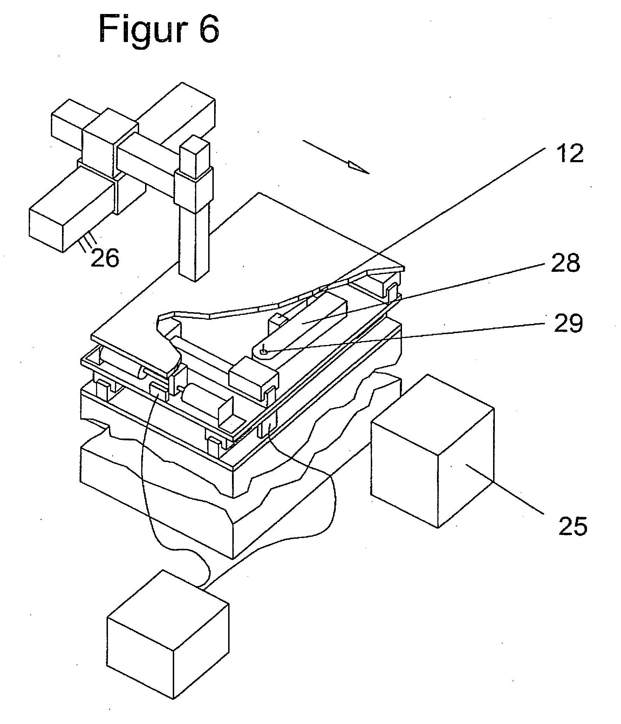

Die Schiebeanschläge 10 und 21 können auch als Winkelhebel ausgebildet sein. Deren Verhalten bei einer Kollision ist in den Figuren 5 und 6 dargestellt. So ist entsprechend Figur 5 der Schiebeanschlag 10 durch einen Winkelhebel 28 ersetzt, der mit einem Drehgelenk 29 mit einer der beiden benachbarten Platten 1,2 verbunden ist. Bei einer Kollision des Bearbeitungskopfes 5 mit dem Kollisionsgegner 24 wird nach Überschreitung der Oberflächenkraft zwischen Winkelhebel 28 und erstem Festanschlag 11deren kraftschlüssige Verbindung gelöst und es wird sich die zweite Platte 2 relativ zur ersten Platte 1 und entgegen der Bewegungsrichtung des Bearbeitungskopfes 5 bewegen. Die Verbindung zwischen dem zweiten Festanschlag 12 und dem Winkelhebel 28 bleibt bestehen, eine Relativbewegung des Winkelhebels 28 um sein Drehgelenk erfolgt nicht.

Hingegen wird entsprechend Figur 6 bei einer Kollision des Bearbeitungskopfes 5 mit dem Kollisionsgegner 25 die kraftschlüssige Verbindung zwischen dem zweiten Festanschlag 12 und dem Winkelhebel 28 auf Zug beansprucht und wird gelöst werden. Der Winkelhebel 28 führt eine Schwenkbewegung um sein Drehgelenk 29. relativ zur zweiten Platte 2 im Uhrzeigersinn aus. Die zweite Platte2 vollführt relativ zur ersten Platte1 eine Bewegung entgegen der Bewegungsrichtung des Bearbeitungskopfes 5.

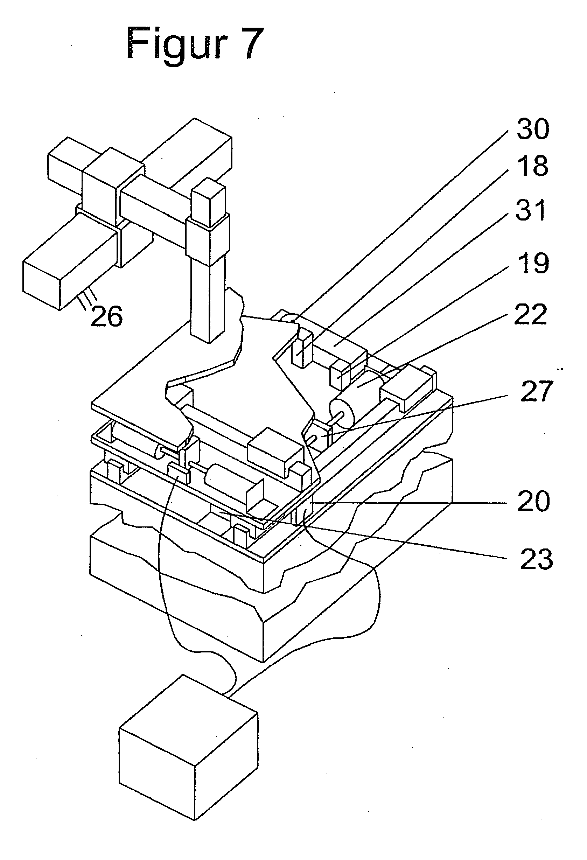

Die konstruktive Gestaltung des zweiten Winkelhebels 31 als Ersatz für den zweiten Schiebeanschlag 21 ist in Figur 7 dargestellt.

Die Vorteile der erfindungsgemäßen Einrichtung können zusammengefasst darin gesehen werden:
- Vermeidung von Beschädigungen eines Sprühwerkzeuges, eines Brenners von Brennschneidautomaten oder von Lichtbogenschweißanlagen oder von Werkzeugen / Greiforganen von Manipulatoren in Montagefertigungen
- Vermeidung der Beschädigung an Maschinen, Anlagenteilen und an Werkstücken
- Schnelle und genaue Rückführung des bei einer ungewollten Kollision ausgelenkten Werkzeuges in den justierten Werkzeugmittelpunkt
- Senkung der Stillstandszeit einer Bearbeitungsmaschine, eines Montageroboters nach einem Kollisionsfall
- Einsparung an Arbeitszeit eines qualifizierten Einrichters.

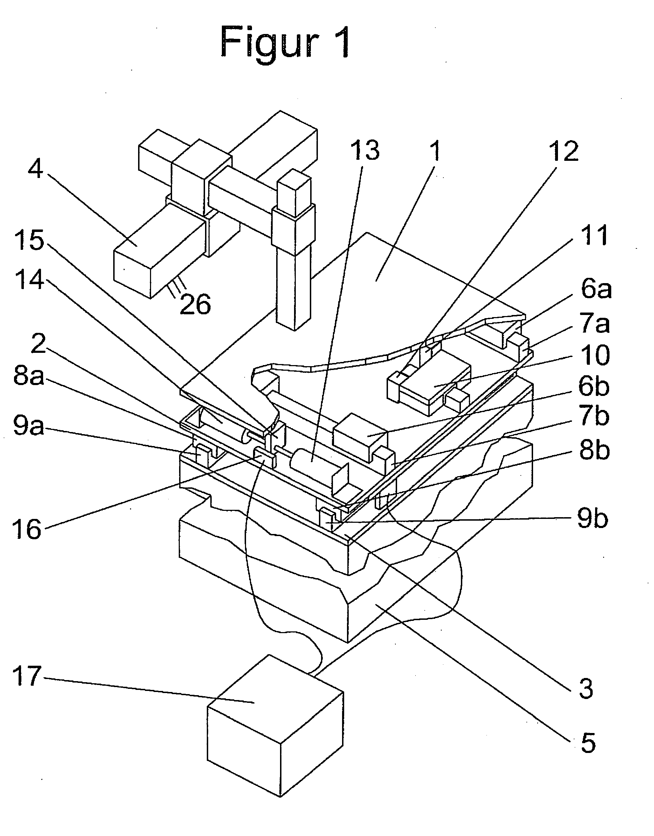

Die in Figur 1 verwendeten Bezugszeichen bedeuten:
- 1 -: Erste Platte
- 2 -: Zweite Platte
- 3 -: Dritte Platte
- 4 -: Führungsmaschine
- 5 -: Bearbeitungskopf
- 6 a -: Erster Linearschlitten
- 6 b -: Erster Linearschlitten
- 7 a -: Erste Linearschiene
- 7 b -: Erste Linearschiene
- 8 a -: Zweiter Linearschlitten
- 8 b -: Zweiter Linearschlitten
- 9 a -: Zweite Linearschiene
- 9 b -: Zweite Linearschiene
- 10 -: Erster Schiebeanschlag
- 11 -: Erster Festanschlag
- 12 -: Zweiter Festanschlag
- 13 -: Erster Linearantrieb
- 14 -: Zweiter Linearantrieb
- 15 -: Erster Mittelanschlag
- 16 -: Erster Linearbewegungssensor
- 17 -: Steuerung
- 18 -: Dritter Festanschlag
- 19 -: Vierter Festanschlag
- 20 -: Zweiter Linearbewegungssensor
- 21 -: Zweiter Schiebeanschlag
- 22 -: Dritter Linearantrieb
- 23 -: Vierter Linearantrieb
- 24 -: Erster Kollisionsgegner
- 25 -: Zweiter Kollisionsgegner
- 26 -: Gestell
- 27 -: Zweiter Mittelanschlag
- 28 -: Erster Winkelhebel
- 29,30 -: Drehgelenk
- 31 -: Zweiter Winkelhebel

## Patentansprüche

1. Einrichtung zum Schutz von beweglichen, bevorzugt reaktionskraftfrei wirkenden Bearbeitungsköpfen (5), die eine erste Platte (1), eine zweite Platte (2) und eine dritte Platte (3) aufweist, die seriell nacheinander und untereinander jeweils schiebebeweglich verbunden sind, wobei die erste Platte (1) und die zweite Platte (2) über erste Linearschlitten (6a, 6b) und erste Linearschienen (7a, 7b) verbunden sind, und die zweite Platte (2) und die dritte Platte (3) über zweite Linearschlitten (8a, 8b) und zweite Linearschienen (9a, 9b) verbunden sind, wobei die beiden Schubrichtungen unterschiedlich und bevorzugt rechtwinklig sind und bevorzugt rechtwinklig zur Schwerkraft wirken, wobei die erste Platte (1) mit einer Führungsmaschine (4) und die dritte Platte (3) mit einem Bearbeitungskopf (5) jeweils fest verbindbar sind, wobei sich zwischen der ersten Platte (1) und der zweiten Platte (2) ein erster Schiebeanschlag (10) befindet, der zu der ersten Platte (1) und der zweiten Platte (2) in derselben Richtung wie diese untereinander schiebebeweglich ist, wobei mittels Oberflächenkräften zwischen dem ersten Schiebeanschlag (10) und einem mit der ersten Platte (1) fest verbundenen ersten Festanschlag (11) einerseits und einem mit der zweiten Platte (2) fest verbundenen zweiten Festanschlag (12) andererseits jeweils eine kraftschlüssige Verbindung besteht, die unter Druckbelastung starr ist und die bei Zugbelastung bis zum Erreichen einer Haltekraft ebenso starr ist, bei Überschreitung der Haltekraft jedoch schlagartig öffnet und eine kraftfreie Relativbewegung der ersten Platte (1) und der zweiten Platte (2) entlang einer Wegstrecke ermöglicht, die zum sicheren Abbremsen der Führungsmaschine (4) ausreichend ist, wobei die Verbindung zwischen der ersten Platte (1) und dem ersten Schiebeanschlag (10) entgegengesetzt wie jene zwischen der zweiten Platte (2) und dem ersten Schiebeanschlag (10) wirkt und eine Verbindung zwischen der zweiten Platte (2) und der dritten Platte (3) in gleicher Weise über einen zweiten Schiebeanschlag (21), einen dritten Festanschlag (18) und einen vierten Festanschlag (19), jedoch in unterschiedlicher schiebebeweglicher Richtung, ausgeführt ist.

2. Einrichtung zum Schutz von beweglichen, bevorzugt reaktionskraftfrei wirkenden Bearbeitungsköpfen (5) nach Anspruch 1, **gekennzeichnet dadurch, dass** die durch den ersten Schiebeanschlag (10), und die von ihm ausgeübten Oberflächenkräfte, bestehende starre Verbindung zwischen der benachbarten, ersten Platte (1) und der zweiten Platte (2) mittels eines ersten Linearbewegungssensors (16) und zwischen der zweiten Platte (2) und der dritten Platte (3) mittels eines zweiten Linearbewegungssensors (20) überwachbar sind und der erste Linearbewegungssensor (16) ebenso wie der zweite Linearbewegungssensor (20) im Kollisionsfall ein richtungsabhängiges Sensorsignal generieren, welche zur Steuerung (17) sendbar sind.

3. Einrichtung zum Schutz von beweglichen, bevorzugt reaktionskraftfrei wirkenden Bearbeitungsköpfen (5) nach Anspruch 1 und 2, **gekennzeichnet dadurch, dass** der erste Linearbewegungssensor (16) und der zweite Linearbewegungssensor (20) über ein Getriebe mit einer deutlich unter 1 liegenden Übersetzung mit der Relativbewegung der ersten und zweiten Platte (1, 2) sowie der zweiten und dritten Platte (2, 3) verbunden sind.

4. Einrichtung zum Schutz von beweglichen, bevorzugt reaktionskraftfrei wirkenden Bearbeitungsköpfen (5) nach Anspruch 1 bis 3, **gekennzeichnet dadurch, dass** die Steuerung (17) mit dem ersten Linearbewegungssensor (16) einerseits und der Führungsmaschine (4) andererseits in Wirkverbindung steht und die Richtungsabhängigkeit des Sensorsignals benutzbar ist, eine Ausweichbewegung des Bearbeitungskopfes (5) zu initiieren, indem vermittels von mit der zweiten Platte (2) verbundenen, schnell wirkenden ersten und zweiten Linearantrieben (13, 14) zwischen der ersten Platte (1) und der zweiten Platte (2) und unter Nutzung eines mit der ersten Platte (1) verbundenen Mittelanschlages (15) der Bearbeitungskopf (5) entgegen der wirkenden Kraftrichtung bewegbar ist und ein identischer Wirkmechanismus zwischen der zweiten Platte (2) und der dritten Platte (3) besteht unter Nutzung des zweiten Linearbewegungssensors (20), des zweiten Mittelanschlages (27) und des dritten und vierten Linearantriebes (22, 23).

5. Einrichtung zum Schutz von beweglichen, bevorzugt reaktionskraftfrei wirkenden Bearbeitungsköpfen (5) nach Anspruch 1, **gekennzeichnet dadurch, dass** anstatt des ersten Schiebeanschlages (10) und des zweiten Schiebeanschlages (21) Winkelhebel (28, 31) genutzt werden.

6. Einrichtung zum Schutz von beweglichen, bevorzugt reaktionskraftfrei wirkenden Bearbeitungsköpfen (5) nach Anspruch 1, **gekennzeichnet dadurch, dass** durch einen ersten und einen zweiten Linearantrieb (13, 14), die beide im unkollidierten Zustand außer Eingriff sind, ohne manuelles Zutun ein ferngesteuertes Rückstellen und eine hochgenaue Wiederherstellung der starren Verbindung zwischen der ersten Platte (1) und der zweiten Platte (2) durchführbar ist und ein identischer Wirkmechanismus zwischen der zweiten Platte (2) und der dritten Platte (3) vorliegt.

## Claims

1. Device to protect movable processing heads (5), especially ones that work without reaction power, said device having a first plate (1), a second plate (2) and a third plate (3) that are serially connected and slidably interconnected, wherein the first plate (1) and the second plate (2) are interconnected by means of first linear slides (6a, 6b) and first linear rails (7a, 7b) and the second plate (2) and the third plate (3) are interconnected by means of second linear slides (8a, 8b) and second linear rails (9a, 9b), wherein the two sliding directions are different from each other and are preferably arranged orthogonally to each other and preferably act orthogonally to the force of gravity, wherein the first plate (1) can be rigidly mounted to a guiding machine (4) and the third plate (3) can be rigidly mounted to a processing head (5), wherein a first sliding stop (10) is located between the first plate (1) and the second plate (2), said first sliding stop (10) being slidable relative to the first plate (1) and the second plate (2) in the same direction as the first plate (1) and the second plate (2) are slidable relative to each other, wherein a frictional connection exists between the first sliding stop (10) and a first positive stop (11) that is rigidly mounted to the first plate (1) and a frictional connection exists between the first sliding stop (10) and a second positive stop (12) that is rigidly mounted to the second plate (2), wherein the two frictional connections are caused by surface forces and are rigid under pressure load and are just as rigid under tensile load until a holding force is reached, but abruptly open when the holding force is exceeded and allow a force-free relative motion of the first plate (1) and the second plate (2) for a distance that is sufficient for a safe slowing-down of the guiding machine (4), wherein the action of the connection between the first plate (1) and the first sliding stop (10) is opposite to the action of the connection between the second plate (2) and the first sliding stop (10), and a connection of the same kind, but in a different sliding direction, is designed between the second plate (2) and the third plate (3) by means of a second sliding stop (21), a third positive stop (18) and a fourth positive stop (19).

2. Device to protect movable processing heads (5), especially ones that work without reaction power, according to claim 1, **characterized in that** the rigid connection between the adjacent first plate (1) and second plate (2) can be monitored by means of a first linear motion sensor (16) and between the second plate (2) and the third plate (3) can be monitored by means of a second linear motion sensor (20), said rigid connections existing due to the first sliding stop (10) and the surface forces exerted by it, and that the first linear motion sensor (16) as well as the second linear motion sensor (20) generate a direction-dependent sensor signal in the event of a collision, which signals can be transmitted to the control system (17).

3. Device to protect movable processing heads (5), especially ones that work without reaction power, according to claim 1 and 2, **characterized in that** the first linear motion sensor (16) and the second linear motion sensor (20) are connected to the relative motion of the first plate (1) and the second plate (2) as well as of the second plate (2) and the third plate (3) by means of a transmission with a ratio of considerably less than 1.

4. Device to protect movable processing heads (5), especially ones that work without reaction power, according to claim 1 to 3, **characterized in that** the control system (17) is operatively connected to the first linear motion sensor (16) on the one hand and to the guiding machine (4) on the other hand and the dependence of the sensor signal on the direction can be used for initiating an evasive movement of the processing head (5) by being able to move, by means of quick-acting first and second linear drives (13, 14) arranged between the first plate (1) and the second plate (2) and connected to the second plate (2) and by using a central stop (15) connected to the first plate (1), the processing head (5) in a direction against the active direction of force, and an identical mechanism of action exists between the second plate (2) and the third plate (3) by using the second linear motion sensor (20), the second central stop (27) and the third and fourth linear drives (22, 23).

5. Device to protect movable processing heads (5), especially ones that work without reaction power, according to claim 1, **characterized in that** angle levers (28, 31) are used instead of the first sliding stop (10) and the second sliding stop (21).

6. Device to protect movable processing heads (5), especially ones that work without reaction power, according to claim 1, **characterized in that**, without any manual intervention, a first linear drive (13) and a second linear drive (14) that both are disengaged in the uncollided state can restore the rigid connection between the first plate (1) and the second plate (2) by remote control and re-establish said rigid connection very precisely and an identical mechanism of action exists between the second plate (2) and the third plate (3).

## Revendications

1. Dispositif de protection de corps de traitement (5) mobiles, de préférence actifs sans force de réaction, qui présente une première plaque (1), une deuxième plaque (2) et une troisième plaque (3) qui sont raccordées en série l'une derrière l'autre et entre elles respectivement de façon mobile en coulissement, la première plaque (1) et la deuxième plaque (2) étant raccordées par le biais de premiers chariots linéaires (6a, 6b) et de premiers rails linéaires (7a, 7b), et la deuxième plaque (2) et la troisième plaque (3) étant raccordées par le biais de deuxièmes chariots linéaires (8a, 8b) et de deuxièmes rails linéaires (9a, 9b), les deux directions de poussée étant différentes et de préférence à angle droit et agissant de préférence perpendiculairement à la force de gravité, la première plaque (1) pouvant respectivement être raccordée de façon fixe à une machine de guidage (4) et la troisième plaque (3) pouvant respectivement être raccordée de façon fixe à un corps de traitement (5), une première butée de coulissement (10) se trouvant entre la première plaque (1) et la deuxième plaque (2) et étant mobile en coulissement par rapport à la première plaque (1) et à la deuxième plaque (2) dans la même direction que celles-ci entre elles, un raccordement par friction existant respectivement au moyen de forces superficielles entre la première butée de coulissement (10) et une première butée fixe (11) raccordée de façon fixe à la première plaque (1) d'un côté, et entre une deuxième butée fixe (12) raccordée de façon fixée à la deuxième plaque (2) d'un autre côté, raccordement qui est rigide en présence d'une charge de pression et qui est également rigide en présence d'une charge de traction jusqu'à ce que soit atteinte une force de retenue, raccordement qui s'ouvre cependant brusquement lors du dépassement de la force de retenue et qui permet un mouvement relatif sans force de la première plaque (1) et de la deuxième plaque (2) le long d'une d'un segment de course qui est suffisant pour un freinage sûr de la machine de guidage (4), le raccordement entre la première plaque (1) et la première butée de coulissement (10) agissant de façon opposée comme celui entre la deuxième plaque (2) et la première butée de coulissement (10), et un raccordement étant réalisé entre la deuxième plaque (2) et la troisième plaque (3) de la même façon par le biais d'une deuxième butée de coulissement (21), d'une troisième butée fixe (18) et d'une quatrième butée fixe (19), mais dans une direction mobile en coulissement différente.

2. Dispositif de protection de corps de traitement (5) mobiles, de préférence actifs sans force de réaction, selon la revendication 1, **caractérisé en ce que** le raccordement rigide entre la première plaque (1) voisine et la deuxième plaque (2), raccordement existant dû à la première butée de coulissement (10) et aux forces superficielles exercées par cette dernière, peut être surveillé au moyen d'un premier capteur de mouvement linéaire (16), et le raccordement rigide entre la deuxième plaque (2) et la troisième plaque (3) peut être surveillé au moyen d'un deuxième capteur de mouvement linéaire (20), et **en ce que** le premier capteur de mouvement linéaire (16) ainsi que le deuxième capteur de mouvement linéaire (20) génèrent en cas de collision un signal de capteur dépendant de la direction, ces signaux pouvant être envoyés à la commande (17).

3. Dispositif de protection de corps de traitement (5) mobiles, de préférence actifs sans force de réaction, selon les revendications 1 et 2, **caractérisé en ce que** le premier capteur de mouvement linéaire (16) et le deuxième capteur de mouvement linéaire (20) sont, par le biais d'un engrenage avec un rapport nettement inférieur à 1, raccordés au mouvement relatif de la première et de la deuxième plaque (1, 2) ainsi que de la deuxième et de la troisième plaque (2, 3).

4. Dispositif de protection de corps de traitement (5) mobiles, de préférence actifs sans force de réaction, selon les revendications 1 à 3, **caractérisé en ce que** la commande (17) est dans une liaison d'action avec le premier capteur de mouvement linéaire (16) d'un côté et la machine de guidage (4) d'un autre côté, et **en ce que** la dépendance du signal de capteur par rapport à la direction est utilisable pour amorcer un mouvement d'évitement du corps de traitement (5) par le fait que, au moyen de premier et deuxième entraînements linéaires (13, 14) agissant rapidement et raccordés à la deuxième plaque (2) entre la première plaque (1) et la deuxième plaque (2), et avec utilisation d'une butée médiane (15) raccordée à la première plaque (1), le corps de traitement (5) peut être déplacé à l'opposé de la direction de force agissante, et **en ce qu'**il existe un mécanisme d'action identique entre la deuxième plaque (2) et la troisième plaque (3), avec utilisation du deuxième capteur de mouvement linéaire (20), de la deuxième butée médiane (27) et du troisième et du quatrième entraînements linéaires (22, 23).

5. Dispositif de protection de corps de traitement (5) mobiles, de préférence actifs sans force de réaction, selon la revendication 1, **caractérisé en ce que** des leviers coudés (28, 31) sont utilisés à la place de la première butée de coulissement (10) et de la deuxième butée de coulissement (21).

6. Dispositif de protection de corps de traitement (5) mobiles, de préférence actifs sans force de réaction, selon la revendication 1, **caractérisé en ce qu'**un rappel télécommandé et un rétablissement très précis du raccordement rigide entre la première plaque (1) et la deuxième plaque (2) sont exécutables sans intervention manuelle par un premier et un deuxième entraînement linéaire, qui sont tous deux hors engrènement dans l'état sans collision, et **en ce qu'**il existe un mécanisme d'action identique entre la deuxième plaque (2) et la troisième plaque (3).
